# EUROPEAN PATENT APPLICATION

(11) **EP 4 531 160 A1**
(43) Date of publication of application: **02.04.2025**
(21) Application number: 23899494.1
(22) Date of filing: 29.08.2023
(51) Int. Cl.: H01M 10/058, H01M 10/0525, H01M 50/103, H01M 50/40, H01M 50/112

(54) **PACKAGING STRUCTURE, BATTERY AND ELECTRONIC DEVICE**

(30) Priority: 05.12.2022 CN 202223265274 U
(71) Applicant: Zhuhai CosMX Battery Co., Ltd., Zhuhai, Guangdong 519180 (CN)
(72) Inventor: SHENG, Donghui, Zhuhai, Guangdong 519180 (CN); XIE, Jichun, Zhuhai, Guangdong 519180 (CN); LIU, Chunyu, Zhuhai, Guangdong 519180 (CN)
(74) Representative: Murgitroyd & Company
(86) International application number: PCT/CN2023/115468
(87) International publication number: WO 2024/119909

(57) **Abstract**

Disclosed are a packaging structure, a battery and an electronic device. The packaging structure includes a packaging film and a partition plate. The packaging film includes a first film housing, a second film housing and a connecting part between them. The connecting part is provided with a groove, and an opening of the groove faces the partition plate. The partition plate is provided in the groove. The partition plate separates the first film housing and the second film housing to form a first accommodating chamber for accommodating a first battery cell and form a second accommodating chamber for accommodating a second battery cell.

## Description

### TECHNICAL FIELD

The present application relates to the field of battery technologies, and in particular, to a packaging structure, battery and electronic device.

### BACKGROUND

Lithium-ion batteries are widely used in products such as cameras, electric tools and electric vehicles and the like. With the improvement in market requirements, the increase in an operating voltage of the lithium-ion batteries becomes increasingly urgent.

At present, a method for increasing the operating voltage of the lithium-ion batteries is to stack a plurality of battery cells in series. Taking two battery cells stacked in series as an example, a partition plate is provided between two package housings, and then the partition plate is connected in a sealed manner to an upper package housing and a lower package housing respectively to achieve packaging. The two battery cells are respectively placed in an accommodating chamber formed by the partition plate and the upper package housing and an accommodating chamber formed by the partition plate and the lower package housing. This packaging method has a problem that assembly is complex.

### SUMMARY

Embodiments of the present application provides a packaging structure, a battery and an electronic device to improve the packaging structure of the battery, so that complexity of an assembly process of the battery is reduced, and a battery structure is simplified to a certain extent.

In order to solve the above-mentioned technical problems, the present application is implemented as follows.

In a first aspect, embodiments of the present application provide a packaging structure which includes:
a packaging film including a first film housing, a second film housing and a connecting part connecting the first film housing and the second film housing;
a partition plate which is provided at the position of the connecting part,
wherein the connecting part is provided with a groove, an opening of the groove faces the partition plate, the partition plate is provided in the groove, and
the partition plate separates the first film housing and the second film housing to form a first accommodating chamber for accommodating a first battery cell with the first film housing and form a second accommodating chamber for accommodating a second battery cell with the second film housing.

Optionally, side edges, except a side edge connected to the connecting part, of the first film housing are all provided with packaging edges, and side edges, except a side edge connected to the connecting part, of the second film housing are all provided with packaging edges, and the packaging edges of the first film housing are connected in a sealed manner to the packaging edges of the second film housing.

Optionally, the partition plate, on a side edge where each of the packaging edges of the first film housing is located and a side edge where each of the packaging edges of the second film housing is located, is configured to be flush with the packaging edge.

Optionally, a width of the connecting part is less than a width of the packaging edges.

Optionally, the width of the connecting part is less than or equal to 3 mm.

Optionally, the packaging film includes a film layer area located between the first film housing and the second film housing, and the film layer area is folded in half and connected to form the connecting part.

Optionally, the opening size of the groove ranges from 0.1 mm to 4 mm.

Optionally, the first film housing, the second film housing and the connecting part are formed as an integrally formed structure.

Optionally, the packaging film is an aluminum-plastic film.

In a second aspect, embodiments of the present application provide a battery which includes: a first battery cell, a second battery cell and the packaging structure according to the first aspect. The first battery cell is placed in the first accommodating chamber formed by the partition plate in the packaging structure and the first film housing in the packaging structure, and the second battery cell is placed in the second accommodating chamber formed by the partition and the second film housing in the packaging structure.

Optionally, the first battery cell includes a first tab extending out of the packaging film in the packaging structure;
the second battery cell includes a second tab extending out of the packaging film; and

the groove in the packaging structure and the first tab are located at two opposite sides of the battery.

Optionally, the first tab and the second tab extend out of a same packaging edge of the packaging film.

In a third aspect, embodiments of the present application provide an electronic device including the battery according to the second aspect.

In the embodiments of the present application, the packaging structure includes the packaging film and the partition plate. The packaging film includes the first film housing, the second film housing and the connecting part connecting the first film housing and the second film housing. The partition plate is provided at the position of the connecting part. The connecting part is provided with the groove, the opening of the groove faces the partition plate, and the partition plate is provided in the groove. The partition plate separates the first film housing and the second film housing to form the first accommodating chamber for accommodating the first battery cell with the first film housing and form the second accommodating chamber for accommodating the second battery cell with the second film housing. In this way, the partition plate is provided at the position of the connecting part by providing the connecting part connected to the first film housing and the second film housing, so that the packaging structure of the battery may be improved, and thus the complexity of the assembly process of the battery is reduced and the battery structure is simplified to a certain extent.

### BRIEF DESCRIPTION OF THE DRAWINGS

In order to illustrate technical solutions of embodiments of the present application more clearly, the drawings required to be used in the description of the embodiments of the present application will be briefly introduced below. Apparently, the drawings described below are merely some of the embodiments of the present application. For a person with ordinary skill in the art, other drawings may be obtained based on these drawings without creative work.
FIG. 1 is an exploded schematic diagram of a structure of a battery in related technologies.
FIG. 2 is a schematic structural diagram of a battery in the related technologies
FIG. 3 is a schematic structural diagram of a battery provided by an embodiment of the present application.
FIG. 4 is a schematic structural diagram of a packaging film and a partition plate provided by an embodiment of the present application.
FIG. 5 is a schematic structural diagram of a packaging film provided by an embodiment of the present application.

### DETAILED DESCRIPTION OF THE EMBODIMENTS

Technical solutions in embodiments of the present disclosure will be described clearly and completely below with reference to the drawings of the embodiments of the present disclosure. Apparently, the described embodiments are only a portion, but not all of the embodiments of the present disclosure. All other embodiments obtained by a person with ordinary skill in the art based on the embodiments in the present disclosure without creative work belong to the protection scope of the present disclosure.

Unless otherwise defined, technical or scientific terms used in the present application shall have the ordinary meaning understood by a person with ordinary skill in the art to which the present application belongs. The "first", "second" and similar words used in the application do not indicate any order, quantity or importance, but are only used for distinguishing different components. Similarly, the words such as "a" or "an" do not indicate a limitation for quantity, but indicate that there is at least one. Similar terms such as "connect" or "connected" are not limited to physical or mechanical connection, but may include electrical connection, whether direct or indirect. The terms such as "upper", "lower", "left", "right" are only used for indicating relative positional relationships which may change accordingly when an absolute position of a described object changes.

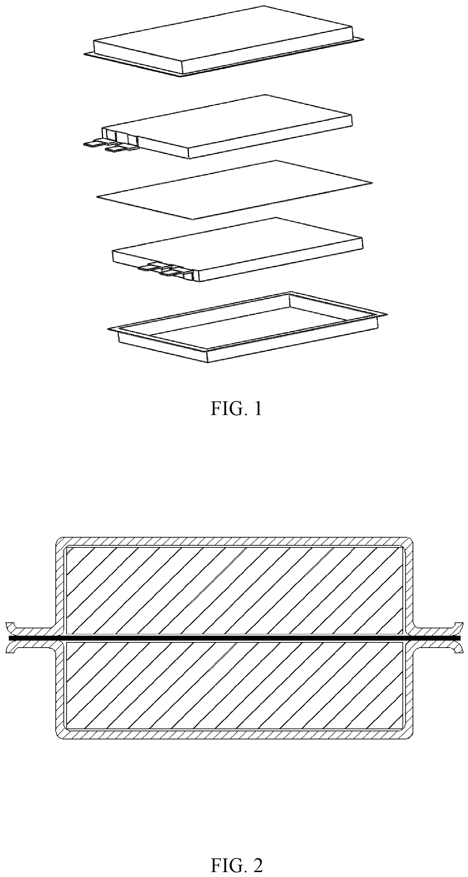

At present, a method for increasing an operating voltage of lithium-ion batteries is to stack a plurality of battery cells in series. Taking two battery cells stacked in series as an example, as shown in FIG. 1, a partition plate is provided between two package housings, and then the partition plate is connected in a sealed manner to an upper package housing and a lower package housing respectively to achieve packaging. The two battery cells are respectively placed in an accommodating chamber formed by the partition plate and the upper package housing and an accommodating chamber formed by the partition plate and the lower package housing. Since the upper package housing and the lower package housing are separately packaged with the partition plate to form the battery, as shown in FIG. 2, assembly is complex.

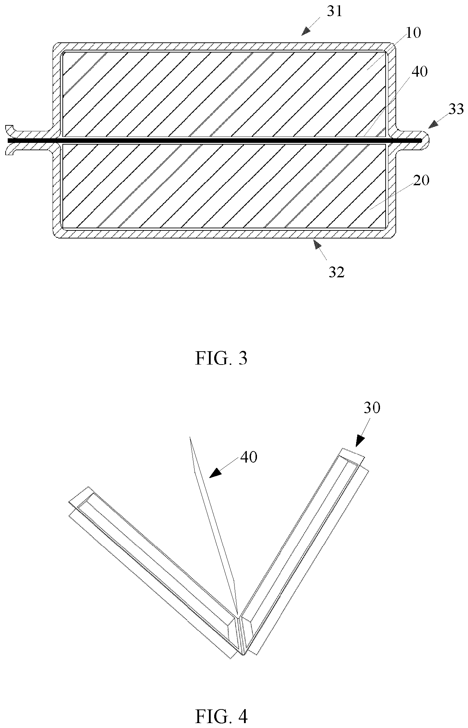

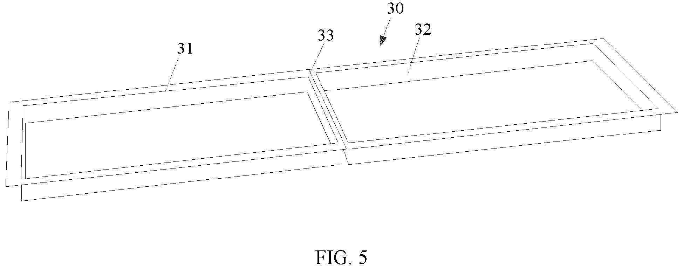

In order to solve the above-mentioned technical problem, embodiments of the present application provide a packaging structure, a battery and an electronic device. For example, referring to FIG. 4 and FIG. 5, this packaging structure may include: a packaging film 30 and a partition plate 40. The packaging film 30 includes a first film housing 31, a second film housing 32 and a connecting part 33 connecting the first film housing 31 and the second film housing 32. The partition plate 40 is provided at the connecting part 33. The connecting part 33 is provided with a groove, an opening of the groove faces the partition plate 40, and the partition plate 40 is provided in the groove. The partition plate 40 separates the first film housing 31 and the second film housing 32 to form a first accommodating chamber for accommodating a first battery cell with the first film housing 31 and form a second accommodating chamber for accommodating a second battery cell with the second film housing 32. The first battery cell and the second battery cell are packaged by using the packaging structure to make a battery obtained by packaging has two film housings connected to each other. Compared with that two package housings are connected in a sealed manner to a partition plate respectively in the related art, the assembly is simple. The present application will be described in detail with reference to the following embodiments.

Please refer to FIG. 3, FIG. 3 is a schematic structural diagram of a battery according to an embodiment of the present application. This battery includes a first battery cell 10, a second battery cell 20, a packaging film 30 and a partition plate 40.

The packaging film 30 includes a first film housing 31, a second film housing 32 and a connecting part 33 connecting the first film housing 31 and the second film housing 32, and the partition plate 40 is provided at the connecting part 33.

The connecting part 33 is provided with a groove, an opening of the groove faces the partition plate 40, and the partition plate 40 is provided in the groove.

The partition plate 40 separates the first film housing 31 and the second film housing 32, the first battery cell 10 is placed in an accommodating chamber (the first accommodating chamber) formed by the partition plate 40 and the first film housing 31, and the second battery cell 20 is placed in an accommodating chamber (the second accommodating chamber) formed by the partition plate 40 and the first film housing 32.

The embodiment of the present application is applicable to a battery including two battery cells arranged in a stacked manner. One battery cell is placed in the accommodating chamber formed by the first film housing 31 and the partition plate 40, and the other battery cell is placed in the accommodating chamber formed by the second film housing 32 and the partition plate 40. The two accommodating chambers are two completely independent spaces to reduce mutual flow of electrolyte in their respective accommodating chambers in a later stage.

It should be understood that the packaging film 30 may be a common aluminum-plastic film. As shown in FIG. 4 and FIG. 5, the packaging film 30 includes the first film housing 31, the second film housing 32 and the connecting part 33 connecting the first film housing 31 and the second film housing 32, and the first film housing 31 and the second film housing 32 are both used for accommodating the battery cells. During a specific implementation, before the battery is packaged, the first film housing 31 and the second film housing 32 may be opened by a manual operation or a mechanical operation or the like, and the partition plate 40 is inserted into the connecting part 33, so that the two battery cells may be respectively placed in the accommodating chamber formed by the partition plate 40 and the first film housing 31 and the accommodating chamber formed by the partition plate 40 and the second film housing 32. In the same way, the first film housing 31 and the second film housing 32 may be closed to each other by the manual operation or the mechanical operation or the like to package the battery cells.

In the embodiment of the present application, the battery includes the first battery cell 10, the second battery cell 20, the packaging film 30 and a partition plate 40. The packaging film 30 includes the first film housing 31, the second film housing 32 and the connecting part 33 connecting the first film housing 31 and the second film housing 32. The partition plate 40 is provided at the connecting part 33. The connecting part 33 is provided with the groove, the opening of the groove faces the partition plate 40, and the partition plate 40 is provided in the groove. The partition plate 40 separates the first film housing 31 and the second film housing 32, the first battery cell 10 is placed in an accommodating chamber formed by the partition plate 40 and the first film housing 31, and the second battery cell 20 is placed in an accommodating chamber formed by the partition plate 40 and the first film housing 32. In this way, the partition plate 40 is provided at the position of the connecting part 33 by providing the connecting part 33 connected to the first film housing 31 and the second film housing 32. Compared with that the two package housings are connected in a sealed manner to the partition plate respectively in the related art, the assembly is simple.

During a specific implementation, an opening size of the groove may range from 0.1 mm to 4 mm. In an optional embodiment, the packaging film 30 includes a film layer area located between the first film housing 31 and the second film housing 32, and the film layer area is folded in half and connected to form the connecting part 33.

It should be understood that a fold position formed by folding the film layer area in half has an insertable space (that is, the above-mentioned groove), and a distance between the two film layers in an area of a fold position should be greater than a thickness of the partition plate 40 to make the partition plate 40 may enter the connecting part 33 via the insertable space, and the partition plate 40 is fixed by the connecting part 33.

In an optional embodiment, the first battery cell 10 includes a first tab extending out of the packaging film 30, and the second battery cell 20 includes a second tab extending out of the packaging film 30.

The groove and the first tab are located at two opposite sides of the battery.

It should be understood that the first battery cell 10 and the second battery cell 20 are arranged in a stacked manner, and the first tab of the first battery cell 10 and the second tab of the second battery cell 20 both extend out of a same packaging edge of the packaging film 30. The two tabs are arranged opposite to the groove on two sides of the battery, that is, a side where the connecting part 33 that does not need to be packaged additionally is away from a side where the tabs are located.

In an optional embodiment, side edges, except a side edge connected to the connecting part 33, of the first film housing 31 are all provided with packaging edges, and the side edges, except a side edge connected to the connecting part 33, of the second film housing 32 are all provided with packaging edges, and the packaging edges of the first film housing 31 are connected in a sealed manner to the packaging edges of the second film housing 32.

It should be understood that the packaging film 30 includes the first film housing 31, the second film housing 32 and the connecting part 33 connecting the first film housing 31 and the second film housing 32. The first film housing 31 and the second film housing 32 are both used for accommodating the battery cells. Taking the battery cells being both square structures as an example, the first film housing 31 and the second film housing 32 are both square structures. The connecting part 33 is provided at one side edge of the first film housing 31 and the second film housing 32, that is, when the first film housing 31 and the second film housing 32 are packaged, only another three side edges need to be packaged. Compared with the related art that two separate package housings have four side edges, end faces need to be packaged are less, so that the risk that battery water vapor enters the first film housing 31 and the second film housing 32 may be reduced.

During a specific implementation, the two battery cells are respectively placed in the first film housing 31 and the second film housing 32, the partition plate 40 is inserted into the connecting part 33, and the first film housing 31 and the second film housing 32 are closed to each other through the connecting part 33. At this time, one battery cell is placed in the accommodating chamber formed by the first film housing 31 the partition plate 40, the other one battery cell is placed in the accommodating chamber formed by the second film housing 32 and the partition plate 40, and the packaging edges of the first film housing 31 and the packaging edges of the second film housing 32 are packaged to finish the packaging of the battery cells.

In an optional embodiment, the partition plate 40, on side edges where the packaging edges is located, is configured to be flush with the packaging edges.

In the present embodiment, the partition plate 40 is configured to be flush with the packaging edges on the side edges where the packaging edges is located, so that packaging strength may be increased.

In the same way, taking the battery cells being square structures as an example, the first film housing 31 and the second film housing 32 are both square structures. Except a side edge where the connecting part 33 is located, the partition plate 40 is also located at another three side edges. Since the first film housing 31 and the second film housing 32 are provided in a non-connected manner on another three side edges except the side edge where the connecting part 33 is located, when the first film housing 31 and the second film housing 32 are packaged, the partition plate 40 may be arranged to be flush with the packaging edges of the first film housing 31 and the packaging edges of the second film housing 32, so that the risk that the battery water vapor enters the first film housing 31 and the second film housing 32 via the packaging edges may be reduced.

In an optional embodiment, a width of the connecting part 33 is less than a width of the packaging edges.

Generally, in order to ensure reliability of the packaging of a battery, a greater width of the packaging edge will be set, and relatively, the greater width of the packaging edge width will occupy an available space of the battery. By providing the width of the connecting part 33 to be less than the width of the packaging edges, a space utilization rate of the battery may be improved while ensuring the reliability of the packaging of the battery.

It should be understood that since the first film housing 31 and the second film housing 32 are an integrally formed structure, in a case that the partition plate 40 is inserted into the connecting part 33, the packaging film 30 may wrap the partition plate 40 located in the connecting part 33. Therefore, in the case that the width of the connecting part 33 is provided to be less than the width of the packaging edges of the first film housing 31 and the width of the second film housing 32, a portion at the side edge where the connecting part 33 is located is also completely isolated from the battery water vapor.

Optionally, the width of the connecting part 33 is less than or equal to 3 mm.

It should be understood that, generally, a width of another packaging edges (not a side edge where the connecting parts 33 is located) formed by the packaging film 30 is greater than 3 mm. The space utilization rate of the battery may be improved by providing the width of the connecting part 33 to be less than or equal to 3 mm.

In an optional embodiment, the first film housing 31, the second film housing 32 and the connecting part 33 are an integrally formed structure.

In the present embodiment, by providing the first film housing 31, the second film housing 32 and the connecting part 33 to be the integrally formed structure, compared with the structure that two package housings are separately provided in the related art, integrity of the film housings to be packaged is improved.

In addition, the partition plate 40 is inserted into the connecting part 33 to facilitate the positioning of the partition plate 40. Further, in the case that the partition plate 40 is inserted into the connecting part 33, the packaging film 30 may wrap the partition plate 40 located in the connecting part 33 to make a portion at the side edge where the connecting part 33 is located may completely be isolated from the battery water vapor, thereby prolonging a cycle service life of the battery.

In a specific implementation, the partition plate 40 is inserted into the connecting part 33, and the first film housing 31 and the second film housing 32 are closed to each other through the connecting part 33. By this way, when the first film housing 31 and the second film housing 32 are packaged in the later stage, the side edge where the connecting part 33 is located does not need to be packaged, further, the number of end surfaces to be packaged may be decreased, and thus the risk that the battery water vapor enters the first film housing 31 and the second film housing 32 may be reduced.

The present application also provides an electronic device which includes the battery above-mentioned. Since the technical solution of the present embodiment includes all the technical solutions of the foregoing embodiments, therefore, at least all technical effects of the foregoing embodiments are capable of being achieved, which will not be described herein again.

The foregoing description is merely specific implementation s of the present application, but the protection scope of the present application is not intended to be limited to this. Any variation or substitution that may be readily conceived of by a person skilled in the art within the technical scope disclosed in the present application shall be covered by the protection scope of the present application. Therefore, the protection scope the present application shall be subject to the protection scope of the claims.

## Claims

1. A packaging structure, comprising:
a packaging film comprising a first film housing, a second film housing and a connecting part connecting the first film housing and the second film housing;
a partition plate which is provided at the position of the connecting part,
wherein the connecting part is provided with a groove, an opening of the groove faces the partition plate, the partition plate is provided in the groove, and
the partition plate separates the first film housing and the second film housing to form a first accommodating chamber for accommodating a first battery cell with the first film housing and form a second accommodating chamber for accommodating a second battery cell with the second film housing.

2. The packaging structure according to claim 1, wherein side edges, except a side edge connected to the connecting part, of the first film housing are all provided with packaging edge, and side edges, except a side edge connected to the connecting part, of the second film housing are all provided with packaging edges, and the packaging edges of the first film housing are connected in a sealed manner to the packaging edges of the second film housing.

3. The packaging structure according to claim 2, wherein the partition plate, on a side edge where each of the packaging edges of the first film housing is located and a side edge where each of the packaging edges of the second film housing is located, is configured to be flush with the packaging edges.

4. The packaging structure according to claim 3, wherein a width of the connecting part is less than a width of the packaging edges.

5. The packaging structure according to claim 4, wherein the width of the connecting part is less than or equal to 3 mm.

6. The packaging structure according to any one of claims 1 to 5, wherein the packaging film comprises a film layer area located between the first film housing and the second film housing, and the film layer area is folded in half and connected to form the connecting part.

7. The packaging structure according to any one of claims 1 to 6, wherein the opening size of the groove ranges from 0.1 mm to 4 mm.

8. The packaging structure according to any one of claims 1 to 7, wherein the first film housing, the second film housing and the connecting part are formed as an integrally formed structure.

9. The packaging structure according to any one of claims 1 to 8, wherein the packaging film is an aluminum-plastic film.

10. A battery, comprising:
a first battery cell;
a second battery cell; and
the packaging structure according to any one of claims 1 to 9,
wherein the first battery cell is placed in the first accommodating chamber formed by the partition plate in the packaging structure and the first film housing in the packaging structure, and the second battery cell is placed in the second accommodating chamber formed by the partition plate and the second film housing in the packaging structure.

11. The battery according to claim 10, wherein
the first battery cell comprises a first tab extending out of the packaging film in the packaging structure;
the second battery cell comprises a second tab extending out of the packaging film; and
the groove in the packaging structure and the first tab are located at two opposite sides of the battery.

12. The battery according to claim 11, wherein the first tab and the second tab extend out of a same packaging edge of the packaging film.

13. An electronic device, comprising the battery according to any one of claims 10 to 12.
